# EUROPEAN PATENT APPLICATION

(11) **EP 0 834 952 A2**
(43) Date of publication of application: **08.04.1998**
(21) Application number: 97307676.3
(22) Date of filing: 30.09.1997
(51) Int. Cl.: H01M 10/50, H01M 2/10

(54) **Cooling method for assembled batteries**

(30) Priority: 30.09.1996 JP 258492/96
(71) Applicant: MATSUSHITA ELECTRIC INDUSTRIAL CO., LTD., Kadoma-shi, Osaka 571 (JP)
(72) Inventor: Morishita, Nobuyasu, Toyohashi-shi, Aichi, 441 (JP); Sato, Kenji, Toyohashi-shi, Aichi, 440 (JP); Inoue, Horoshi, Toyohashi-shi, Aichi, 440 (JP); Okoma, Munehisa, Toyohashi-shi, Aichi, 440 (JP)
(74) Representative: Crawford, Andrew Birkby

(57) **Abstract**

The present invention concerns a method for cooling assembled batteries comprising rechargeable batteries and intends to avoid temperature dispersion among single cells and hence avoid dispersion of battery performance. A module battery 10 is so constructed that convex portions 8 provided on the battery container 2 of the single cells 7 come in contact with each other creating by recessed portion 9 a space 11 in the vertical direction between single cells 7. The module battery 10 is banded by means of aluminum plates 12 and iron bands 13 with the single cells 7 at both ends forced inwardly. The module batteries are placed sideways with the terminals facing the same direction and the cooling medium flows toward the surface where the electrode poles are provided.

## Description

### BACKGROUND OF THE INVENTION

### Field of the Invention

This invention relates to a cooling method for assembled batteries consisting of a combination of rechargeable batteries.

### Description of the Prior Art

Sealed alkaline rechargeable batteries as represented by nickel-cadmium rechargeable battery and nickel-hydrogen rechargeable battery are widely used as the power source for portable electronic equipment such as video camera, lap-top computer, portable telephone because of their high energy density and superior reliability. Single cell of these batteries is a small size sealed alkaline rechargeable battery encased in a metallic container and is cylindrical or rectangular in configuration, and has a capacity in the range 0.5 to 3 Ah. In actual application, it is general practice to use several to ten-odd pieces of single cells encased in a plastic container or a tube. Since these small size sealed alkaline rechargeable batteries have a modest battery capacity of 0.5 to 3 Ah, heat generation per single cell during charge and discharge is minimal. Consequently, even when used with the single cells encased in a plastic container or a tube, the heat generation and radiation balance with each other causing no notable problems concerning the temperature rise of the battery.

Also, although the electrode group of an alkaline rechargeable battery swells by repeated charge and discharge, no notable problem such as deformation of the container due to the swelling of the electrode group has been observed because the container is made of metal and is cylindrical. In the case of a rectangular configuration of the container, because of the small size, no particular contrivance has been required in the container or other parts of the battery.

Recently, however, there is increasing demand for high energy density and high reliability medium size (with capacities of 10 to 100 Ah) and large size (with capacities of 100 Ah or more) batteries as mobile power source for applications such as home appliances and electric vehicles. Number of single cells used in these batteries ranges from several to several hundreds. In the category of medium to large size batteries, open type nickel-cadmium battery and lead-acid rechargeable battery are used for energy storage and uninterrupted power supply applications but they suffer from the cumbersome maintenance of pouring water throughout their life. Therefore, it is necessary to make the batteries for mobile applications such as home appliances and electric vehicles maintenance-free, namely, sealed. As described above, when using alkaline rechargeable batteries as mobile power source for applications from home appliances to electric vehicles, it is necessary to simultaneously achieve sealing and enlarging the battery to medium or to large sizes. In other words, it is necessary to increase the electrical capacity of the single cells and to connect a number of single cells in series to obtain a high voltage while devising to seal the single cells.

In association with charge and discharge, batteries generate reaction heat due to electrode reaction and Joule's heat. Increase in the electrical capacity and sealing of single cells will cause increase in the generated heat and a delay in heat radiation to outside of the battery, causing some of the heat stored inside the battery. As a result, inside temperature of the battery increases higher than that of small size batteries. In module batteries consisting of high capacity single cells connected in series and in assembled batteries consisting of module batteries connected in series, several tens to several hundred single cells are arranged to neighbor each other causing a problem of how to dissipate the heat to outside. To address this kind of a problem, in Japanese Laid-Open Patent Application No. Hei 3-291867, a heat dissipation system for a rechargeable battery system is proposed wherein a space to allow passage of air between adjacent single cells is provided in a battery system consisting of a number of rechargeable single cells comprising positive and negative electrodes and electrolyte and generating heat during charge.

However, mobile batteries as represented by batteries for electric vehicles have limited space for installation on vehicles making it necessary to stack them in two layers in order to accommodate enough number of units of batteries. When batteries are simply stacked in two layers, the flow of cooling air will be either from the top downward or from the bottom upward, and the air once warmed by cooling first set of batteries will flow to the second set of batteries to be cooled later thereby reducing the cooling efficiency of the second set of batteries. When there is a difference in the cooling efficiency between the first and second sets of batteries, a difference in charging efficiency is caused between the two due to the difference in battery temperatures, and resulting in dispersion of battery capacity.

When there is dispersion in the capacities of single cells, toward the end of discharge, batteries with lower capacity are overcharged causing drastic increase in heat generation and resulting in a dangerous situation. It is also anticipated that repetition of such charge and discharge will shorten the cycle life.

### SUMMARY OF THE INVENTION

The present invention addresses these problems and provides a cooling method for assembled batteries with minimal dispersion in battery temperature and performance among the single cells.

Assembled batteries based on the present invention consist of a plurality of module batteries each comprising a plurality of rectangular battery containers each containing an electrode group and having on only one side thereof positive and negative electrode poles and provided with ribs or convex portions on at least the side which comes in contact with other containers to allow passage of cooling medium so that the cooling medium gets in contact with the side of the container whereupon the convex portions are provided and flows discontinuously from the surface opposing the surface provided with the electrode poles toward the surface having the electrode poles.

With this construction, it is possible to efficiently dissipate the heat generated inside the battery to outside of the battery and decrease the temperature difference among batteries, thereby preventing capacity dispersion of each battery and providing assembled batteries having superior cycle life characteristics.

### BRIEF DESCRIPTION OF THE DRAWINGS

Fig. 1 shows the construction of a single cell in an embodiment of the present invention.

Fig. 2 shows the construction of a module battery in an exemplary embodiment in accordance with the present invention.

Fig. 3 shows the construction of assembled batteries in an exemplary embodiment in accordance with the present invention.

Fig. 4 shows the construction of a first example of assembled batteries for comparison.

Fig. 5 shows the construction of a second example of assembled batteries for comparison.

Fig. 6 is a graph showing results of life test.

Fig. 7 shows the construction of assembled batteries in a further exemplary embodiment in accordance with the present invention.

Fig. 8 shows the construction of assembled batteries in a still further exemplary embodiment in accordance with the present invention.

### DETAILED DESCRIPTION OF THE INVENTION

### Embodiments:

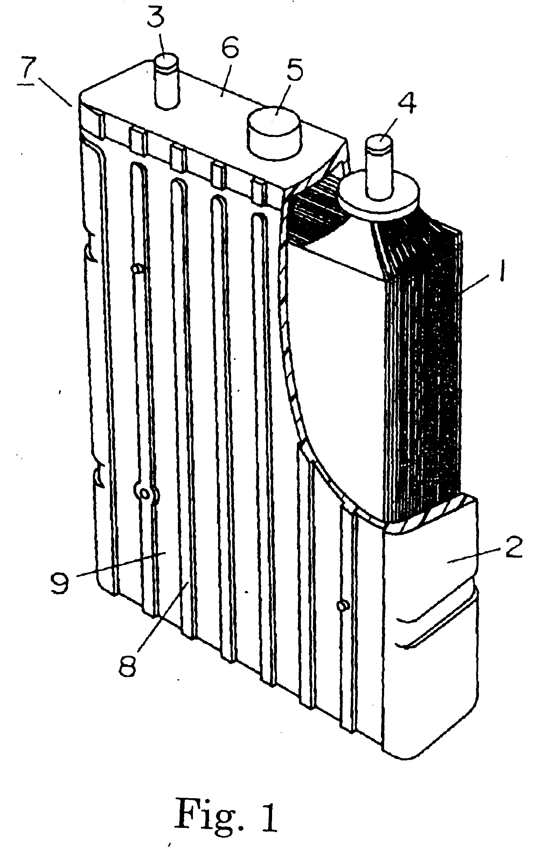

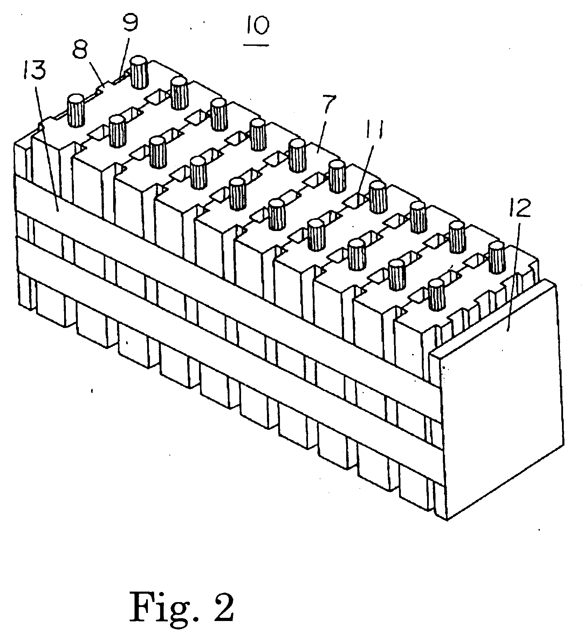

Referring to drawings, details of an embodiment in accordance with the present invention are explained in the following. Fig. 1 shows construction of a single cell of a sealed alkaline rechargeable battery and Fig. 2 shows the construction of a module battery both in accordance with the present invention. An electrode group 1 is fabricated by the following way. First, positive plates are prepared by filling an active material paste of nickel hydroxide powders onto high-porosity formed nickel sheets, followed by pressing and cutting to a predetermined size to obtain a capacity of 10 Ah per plate. Then negative plates are prepared by coating on perforated metal sheets hydrogen absorbing alloy powders which can electrochemically absorb and desorb hydrogen and have a composition of MmNi_{3.6}Co_{0.7}Al_{0.4} together with a binder, followed by pressing and cutting to a predetermined size to obtain a capacity of 13 Ah per plate.

The electrode group 1 is made by enclosing each of these positive and negative plates with a bag-like separator, followed by alternately piling each of ten positive plates and eleven negative plates. The thickness of the electrode group 1 is so chosen as to be approximately 85 to 100 % of the internal dimension of a container 2. After connecting electrode poles made of copper and a positive terminal 3 and a negative terminal 4 both made of nickel to the electrode group 1, the assembly is inserted into the container 2 made of polypropylene, and 180 cm³ of alkaline electrolyte is poured. The open end of the container 2 is then sealed with a cover 6 which is provided with a safety vent 5 (which has an operating pressure of 2-3 kg/cm²) thus completing a single cell 7.

The container 2 has on its outside surface a plurality of ribs, that is, convex portion 8 and recessed portion 9 to allow vertical flow of cooling medium. This way, divided by the convex portions, the cooling medium comes in contact with the container discontinuously rather than uniformly and continuously. The convex portions 8 are 1.5 mm high. By subjecting the single cell 7 to initial charge and discharge (charged at 10 A for 15 hours, discharged at 20 A until the voltage decreases to 1.0 V), the electrode group 1 is caused to swell so that its outermost part touches the container 2. Determined by the positive electrode material used, the battery capacity of the single cell 7 is 100 Ah.

A module battery 12 as shown in Fig. 2 is made by connecting in series 10 units of single cell 7 thus prepared. The module battery 12 is constructed in such away that the convex portions 8 provided on the outside of container 2 of a single cell come in contact with the convex portions of neighboring containers, leaving spaces 11 produced by the recessed portion 9 between the single cells 7 in the vertical direction. The module battery 10 is so banded with aluminum plates 12 and iron bands 13 that the single cells 7 at both ends are forced inwardly. The battery voltage of the module battery is 12 V.

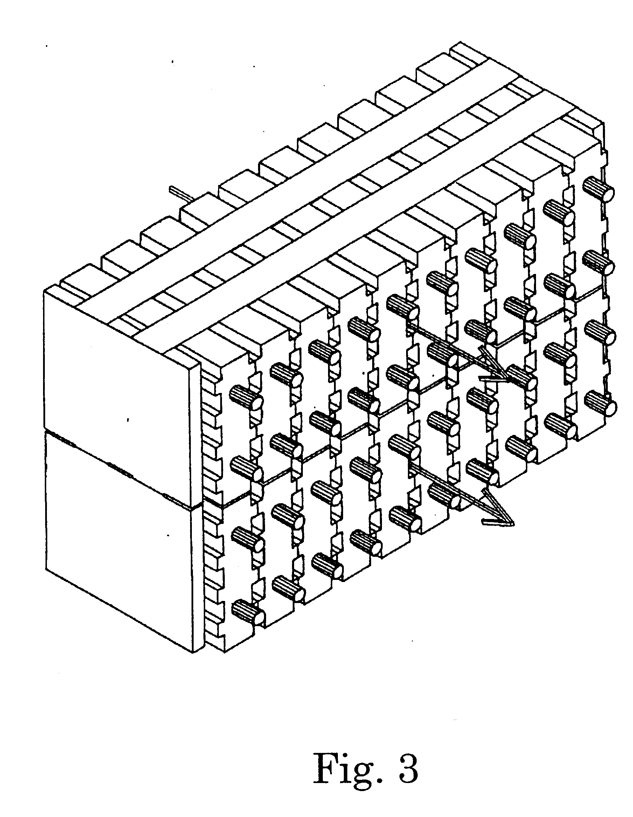

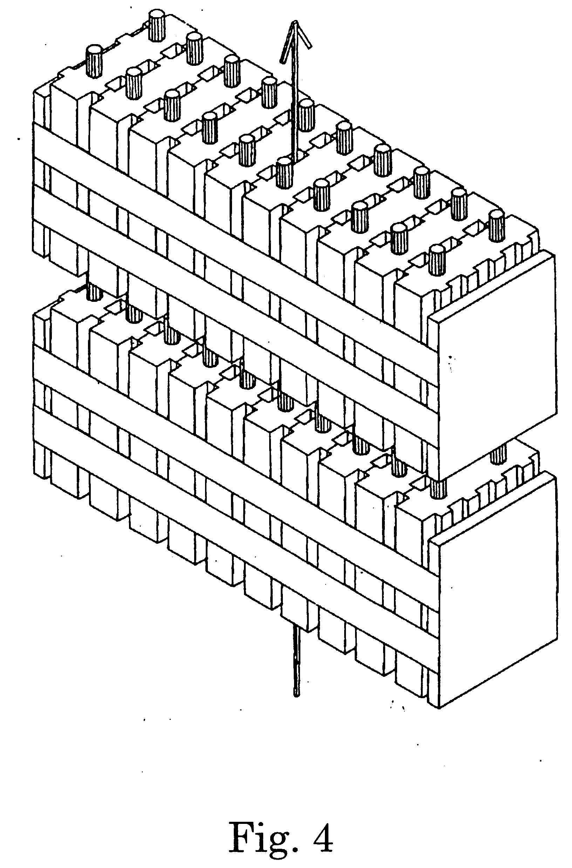

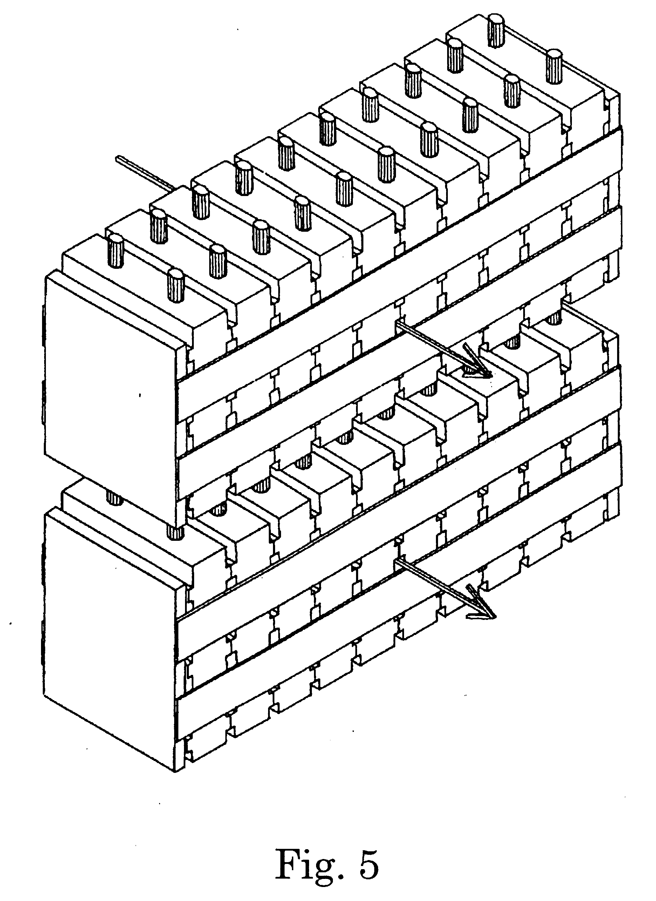

Comparison of the cooling methods for two module batteries stacked one on top of the other was made of the following three configurations including comparative examples. In the drawings, arrows indicate the direction of flow of cooling medium. In Fig. 3 which shows an exemplary embodiment in accordance with the present invention, the module batteries are placed sideways with the terminals facing the same direction allowing the cooling medium to flow toward the side where the electrode poles are provided. For comparison, in Fig. 4, the module batteries in upright position are stacked in the vertical direction allowing the cooling medium to cool module batteries in a continuous way. For a further comparison, in Fig. 5, module batteries were constructed using battery containers having convex portions provided in the horizontal direction and stacked in the vertical direction allowing the cooling medium to traverse between the single cells.

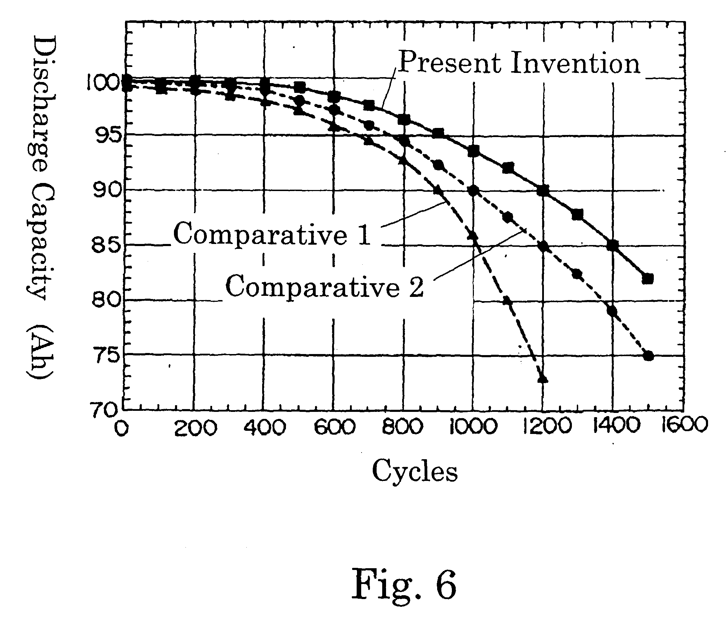

Cycle life test was conducted of the two module batteries in three types of configurations as described above, namely, one in accordance with the present invention, and the other two for comparison. The test consisted of charging at 10 A for 12 hours, leaving for 1 hour, and discharging at 20 A until the voltage decreases to 20 V. Discharge capacity of the module batteries was calculated based on the time of discharge until the battery voltage decreased to 20 V. While the module batteries are being charged, air was blown with a fan through the space between single cells and between the aluminum plates and the single cells in the direction of the arrow. The average velocity of the air passing through the space 11 was chosen to be 2.0 m/sec, and the ambient temperature was chosen to be 20°C. The test results are as shown in Fig. 6.

As seen in Fig. 6, the life test shows that the capacity of the first module battery for comparison decreased first, followed by the second module battery for comparison. The module battery in accordance with the present invention showed the longest life. The reason is because in the first module battery for comparison, the cooling air first cooled the lower module battery, then the warmed air passed through single cells of the upper module battery. Consequently the upper module battery was not fully cooled causing temperature difference between the two module batteries. The temperature difference further caused difference in the charging efficiency resulting in difference in the discharge capacity. The upper module battery underwent over-discharge, corrosion of the negative electrode alloy proceeded, and the battery life was shortened. In the case of the second module battery for comparison, although there was no temperature difference between the upper and lower module batteries and thus no dispersion among single cells, temperature difference was caused between the left and right portions of each battery. This caused difference in charging efficiency inside the electrode plates, leading to uneven reactions inside the electrode plates. As a result, local overcharge during charge and local over-discharge during discharge occurred, which caused advance of deterioration of the active materials and ending in a shortened life of the battery.

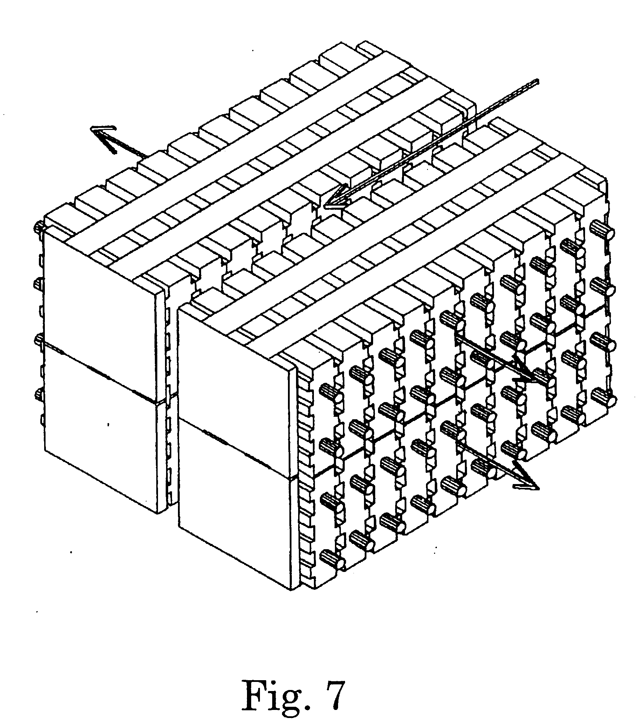

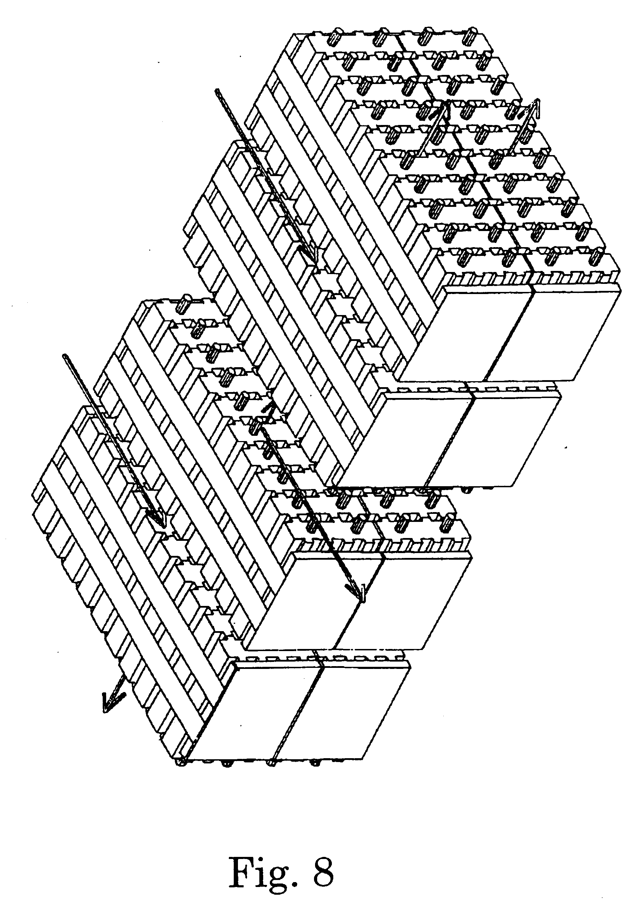

Contrary to the module batteries for comparison, in the module battery in accordance with the present invention, the cooling air uniformly cools each single cell without causing temperature difference among single cells. Also, even though the temperature increases at the exit of the cooling air, heat from the electrode group can be removed via the terminals thereby minimizing the temperature dispersion inside the electrode plates resulting in a longer life. In the meantime, in the first module battery for comparison, since its cross sectional area for air flow was half that of the second module battery for comparison, the total volume of blown air was half that of the second module battery for comparison. It was confirmed that when the air flow rate of the first module battery for comparison was doubled in order to make the total volume of blown air the same as that of the second module battery for comparison, the cycle life characteristic the first module battery was better than that of the second module battery for comparison. When two pairs of module batteries are placed back to back as shown in Fig. 7, a larger number of single cells can be uniformly cooled demonstrating the effect of the present invention. By arranging more than one combination of module batteries shown in Fig. 7 at some distance from each other to allow flow of cooling air as illustrated in Fig. 8, a still larger number of single cells can be uniformly cooled.

As described above in detail, the present invention provides a cooling method for assembled batteries consisting of a plurality of module batteries each comprising a plurality of rectangular battery containers containing groups of electrodes, and having on only one side thereof positive and negative electrode poles. Convex portions are provided on at least the sides of each container which are in contact with other containers to allow passage of cooling medium so that the cooling medium gets in contact with the sides of the container whereupon ribs are provided and flows discontinuously from the surface opposing the surface provided with the electrode poles toward the surface provided with the electrode poles thereby the heat generated inside the batteries can be efficiently dissipated to outside of the batteries thus decreasing temperature difference between single cells. Consequently, this cooling method prevents capacity variation among single cells and provides assembled batteries with superior cycle life characteristic.

## Claims

1. A method of cooling assembled batteries wherein the assembled batteries consisting of a plurality of module batteries each comprising a plurality of rectangular battery containers containing therein electrode groups and having on only one side of the containers positive and negative electrode poles and provided with convex portions on at least the sides which are in contact with other containers to allow passage of cooling medium so that the cooling medium gets in contact with the sides of the container whereupon convex portions are provided and flows from the surface opposing the surface provided with electrode poles toward the surface having electrode poles.

2. A method of cooling assembled batteries according to Claim 1, wherein cooling medium comes in contact discontinuously with the container surface provided with said convex portions.

3. A method of cooling assembled batteries wherein the assembled batteries consisting of a plurality of module batteries each comprising a plurality of rectangular battery containers containing therein electrode groups and having on only one side of each container positive and negative electrode poles and provided with convex portions on at least the sides which are in contact with other containers are stacked on top of the other sideways with the side provided with said electrode poles facing the same direction to allow passage of cooling medium so that the cooling medium flows from the side opposing the side provided with said electrode poles to the side provided with said electrode poles.
